# FASCICULE DE BREVET EUROPEEN

(11) **EP 0 905 281 B1**
(45) Date de publication et mention de la délivrance du brevet: **29.10.2003**
(21) Numéro de dépôt: 98402342.4
(22) Date de dépôt: 24.09.1998
(51) Int. Cl.: C23C 30/00, C23C 28/00

(54) **Procédé pour améliorer la résistance à l'oxydation et à la corrosion d'une pièce en superalliage et pièce en superalliage obtenue par ce procédé**
Verfahren zur Verbesserung der Oxidations- und Korrosionsbeständigkeit eines Gegenstand aus Superlegierung und Gegenstand aus Superlegierung so hergestellt
Process for improving the oxydation and corrosion resistance of a superalloy part and superalloy part obtained

(30) Priorité: 25.09.1997 FR 9711925
(43) Date de publication de la demande: 31.03.1999
(73) Titulaire: Snecma Moteurs, 75015 Paris (FR)
(72) Inventeur: Jaslier, Yann, 77000-Melun (FR); Alperine, Serge Alexandre, 75004 Paris (FR); Leger, Jacques Louis, 77380 Combs La Ville (FR)

(56) Documents cités:
- EP-A- 0 370 838
- EP-A- 0 725 842
- WO-A-96/13622
- US-A- 4 826 738
- US-A- 4 895 201
- US-A- 5 538 796
- US-A- 5 540 790

## Description

L'invention concerne un procédé pour améliorer la résistance à l'oxydation et à la corrosion d'une pièce en superalliage et une pièce en superalliage obtenue par ce procédé.

L'invention s'applique à tous types de superalliages et en particulier aux superalliages monocristallins et aux superalliages comportant une faible densité de joints de grains et faiblement alliés en hafnium (concentration en hafnium inférieure à 0,5 % massique)

Les constructeurs de moteurs à turbine, terrestres ou aéronautiques, sont confrontés à des impératifs d'augmentation de rendement et de réduction de leur consommation spécifique. Une des façons de répondre à ces impératifs consiste à augmenter la température des gaz brûlés en entrée de turbine. Cette approche est cependant limitée par la capacité des pièces de la turbine, tels que les distributeurs ou les aubes mobiles des étages haute pression, de pouvoir résister aux hautes températures. Des matériaux métalliques réfractaires, appelés superalliages, ont été développés pour constituer ces pièces de turbine. Ces superalliages à base de nickel, de cobalt ou de fer, confèrent au composant la résistance mécanique aux hautes températures (résistance au fluage). Aujourd'hui, la température des gaz brûlés, typiquement 1600°C pour un moteur moderne, excède le point de fusion des superalliages utilisés, et les aubes et les distributeurs des étages haute pression sont refroidis par convection par de l'air à 600°C prélevé sur les étages du compresseur. Une partie de cet air de refroidissement qui circule dans les canaux intérieurs des pièces est évacuée par les trous de ventilation percés dans la paroi pour former un film d'air froid entre la surface de la pièce et les gaz chauds.

Parallèlement à l'adoption de techniques de refroidissement sophistiquées, plusieurs générations de superalliages ont été développées avec des résistances au fluage accrues pour répondre au besoin d'augmenter la limite de température en entrée de turbine. La température limite d'utilisation de ces superalliages est de l'ordre de 1050°C.

Les améliorations des superalliages ont été réalisées au détriment de leur tenue à la corrosion à chaud et à l'oxydation, ce qui a nécessité le développement de revêtements protecteurs contre l'oxydation et la corrosion. Il existe deux types de revêtements protecteurs :
- les revêtements de type aluminiures de nickel NiAl, comportant un pourcentage atomique d'aluminium situé entre 40% et 55%. Ces revêtements de structure intermétallique peuvent être modifiés par l'adjonction de chrome et/ou de métal précieux.
- les revêtements métalliques de type MCrAlY, où M désigne le nickel, le cobalt, le fer ou une combinaison de ces métaux.

Ces deux types de revêtements protecteurs ont pour propriété de former un film d'oxyde d'aluminium, appelé alumine, qui isole le métal sous-jacent de l'environnement extérieur.

Après le développement des superalliages et des techniques de refroidissement des aubes mobiles et des distributeurs, les revêtements de type barrière thermique constituent la dernière technologie en date qui permette de réaliser des gains significatifs de température en entrée de turbine. La technologie des barrières thermiques consiste à revêtir les pièces en superalliage par une fine couche de céramique isolante d'épaisseur pouvant varier de quelques dizaines de microns à quelques millimètres. La couche de céramique est le plus souvent constituée de zircone stabilisée avec de l'yttrine qui présente les avantages d'une faible conductivité thermique et d'une bonne stabilité chimique aux hautes températures. La couche de céramique peut être déposée par projection thermique ou par dépôt physique en phase vapeur sous faisceau d'électrons, désigné par l'acronyme anglais EB-PVD (electron beam physical vapour deposition). Pour une application sur la pale des aubes et des distributeurs, la méthode de dépôt préférée est l'EB-PVD principalement en raison d'un bon état de surface du revêtement et du contrôle de l'obstruction des trous de ventilation des pièces. La couche de céramique déposée par EB-PVD est constituée de micro colonnes perpendiculaires à la surface de la pièce. Cette microstructure permet au revêtement de s'accommoder des déformations d'origine thermique ou mécanique dans le plan du substrat en superalliage.

La principale difficulté à surmonter dans la technologie des barrières thermiques consiste à assurer la bonne adhérence de la couche céramique sur la pièce qu'elle a pour fonction de protéger. L'adhérence de la couche céramique déposée par EB-PVD n'est pas mécanique, contrairement aux revêtements céramiques élaborés par projection thermique, mais est constituée par des liaisons chimiques avec la surface de la pièce. La conductivité ionique et la structure poreuse d'une couche céramique à base de zircone est de nature, aux hautes températures, à permettre la diffusion de l'oxygène du milieu environnant vers l'interface avec la pièce métallique, avec pour conséquence l'oxydation du métal.

Pour obtenir une bonne adhérence de la couche céramique sur la pièce en superalliage, le film d'oxyde formé à l'interface entre le superalliage et la couche céramique EB-PVD, doit être à la fois adhérent au métal de la pièce et à la couche céramique, et posséder une bonne tenue mécanique tout en limitant l'oxydation du métal sous-jacent. Pour augmenter l'adhérence de la couche céramique sur la pièce en superalliage, il est connu d'intercaler entre le superalliage et la couche céramique EB-PVD, une sous-couche qui sert de site de croissance à un film d'alumine alpha de quelques dixièmes de microns à quelques microns d'épaisseur.

Les sous-couches de barrières thermiques EB-PVD utilisées à ce jour sont les revêtements qui ont été développés pour protéger les superalliages contre l'oxydation aux hautes températures. Ces revêtements ont pour propriété d'être alumino-formeur, c'est-à-dire de former un film d'oxyde d'aluminium en présence d'oxygène aux hautes températures. Les brevets US 4321311, US 4401697 et US 4405659 enseignent l'utilisation des revêtements de type MCrAlY en sous-couche de barrière thermique. Les brevets US 4880614, US 4916022 et US 5015502 révèlent l'intérêt d'utiliser en sous-couche de barrière thermique des revêtements appartenant à la famille des aluminiures.

Il est également connu du brevet US 5427866 et de la demande de brevet EP0718420A1 de déposer la couche céramique directement sur le superalliage de base modifié en surface par un métal précieux de la mine du platine. La modification de surface du superalliage est élaborée par le dépôt sur le superalliage de base d'une couche de platine électrolytique de plusieurs microns d'épaisseur, suivi d'un traitement thermique de diffusion sous-vide à une température comprise entre 1000°C et 1150°C. Le platine réagit avec l'aluminium du superalliage de base pour former un aluminiure complexe de platine incorporant plusieurs éléments dont le nickel.

Il est bien connu que la résistance à l'oxydation des superalliages peut être améliorée par l'adjonction d'yttrium dans le superalliage, la teneur en poids en Yttrium pouvant varier de quelques dizaines de ppm (ppm signifiant partie par million) à quelques pour-cents. L'ajout d'yttrium a pour effet d'améliorer fortement l'adhérence des films d'oxydes. Certains autres éléments tels que le hafnium, le zirconium, le cérium et de façon générale les lanthanides permettent également d'améliorer l'adhérence des couches d'alumine. Cet effet de l'ajout d'yttrium et/ou des éléments apparentés, appelés éléments actifs (Reactive Element en anglais), est exploitée dans le brevet US 5262245 qui décrit un revêtement de barrière thermique comportant une couche de céramique déposée directement sur un superalliage recouvert d'un film d'alumine, sans l'utilisation d'une sous-couche. L'absence de sous-couche permet d'obtenir une réduction de coût de fabrication, une réduction de masse, et une meilleure maîtrise des géométries de pales dites à parois minces.

L'effet bénéfique de l'adjonction d'yttrium et/ou d'éléments actifs sur l'adhérence des couches d'oxyde est dû principalement au piégeage, au coeur de l'alliage, de l'impureté de soufre sous forme de sulfures ou d'oxysulfures d'yttrium. Le soufre piégé par l'ajout d'éléments actifs n'est pas libre de se mouvoir aux hautes températures et ne peut plus ségréger aux interfaces oxyde/métal.

L'effet néfaste du soufre résiduel sur l'adhérence des couches d'alumine formées sur les superalliages a été mis en évidence par les expériences de Smialek et al "Effect of sulfur Removal on Scale Adhesion to PWA 1480" Metallurgical and Materials Transactions A Vol. 26A, february 1995.
Ses expériences ont consisté à soumettre à des essais d'oxydation cyclée des échantillons de NiCrAl ayant subi un traitement de désulfuration par traitement thermique sous hydrogène. La tenue à l'oxydation d'un alliage désulfuré se trouve être comparable à celle d'un alliage dopé par l'ajout d'yttrium ou d'autres éléments actifs. Le brevet US 5538796 décrit le dépôt d'une couche de céramique EB-PVD directement sur l'alliage de base désulfuré à une teneur inférieure à 1 ppm et recouvert d'un film d'alumine sans utiliser de sous-couche et sans ajouter de l'yttrium au superalliage. Ce brevet précise que les revêtements de type aluminiures contiennent une teneur en soufre pouvant varier de 8 à 70ppm ce qui dissuade fortement de les utiliser en sous-couches de barrière thermique EB-PVD sur un superalliage préalablement désulfuré à moins de 1ppm.

Cependant, pour améliorer leur tenue en fluage, les superalliages de nouvelles générations comportent généralement des faibles teneurs en aluminium et en chrome. Ces teneurs sont insuffisantes pour garantir la pérennité de la couche d'alumine formée directement sur ces superalliages en l'absence de sous-couche, même après un traitement de désulfuration de l'alliage. La durée de vie de la couche d'alumine en l'absence de sous-couche est faible en raison d'un faible réservoir d'aluminium et de la faible activité de l'aluminium dans le superalliage. La faible teneur en chrome dans le superalliage ne permet pas au chrome de renforcer l'activité de l'aluminium.

Le brevet americain n° 5,538 796 decrit comment contrôler la teneur en soufre dans un substat en superalliage, préférablement au moins de 1,0 ppm, afin d'améliorer l'adhérence d'une couche d'alumine sur ce substrat, même en l'absence d'une couche intermédiaire.

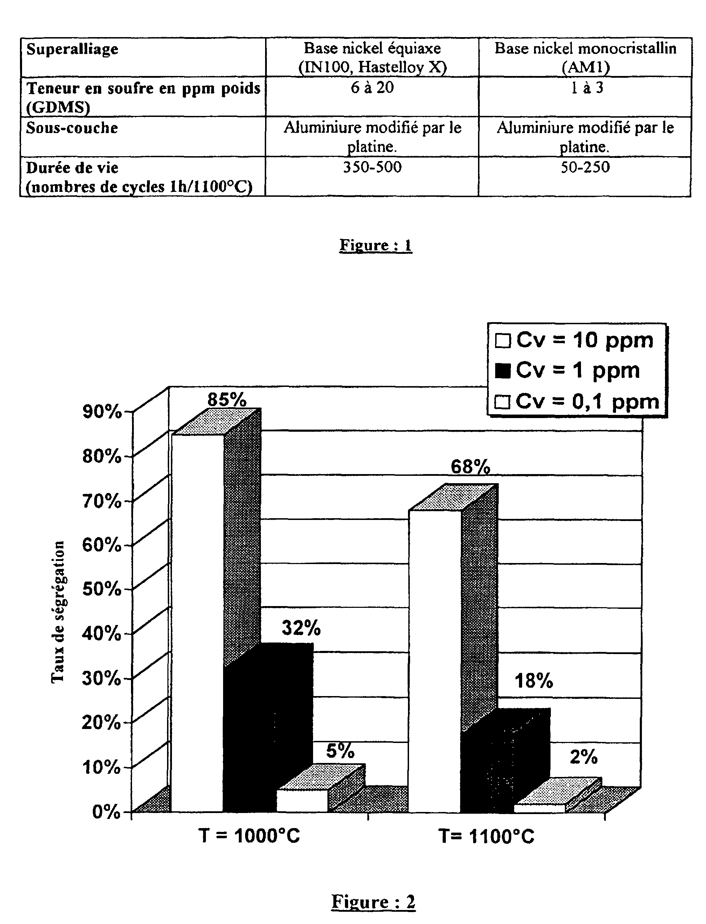

Les différents revêtements ou sous-couches de barrière thermique utilisés pour augmenter l'adhérence des couches céramiques déposées sur les superalliages et pour améliorer la résistance des superalliages à l'oxydation sont très efficaces sur les alliages polycristallins, mais sont généralement moins performants sur les alliages monocristallins. En effet, nous avons constaté que la résistance à l'écaillage des barrières thermiques déposées par un procédé EB-PVD et la tenue à l'oxydation des revêtements anti-oxydation est beaucoup plus faible sur des alliages monocristallins que sur des alliages polycristallins. A titre d'exemple, à la figure 1 sont indiquées les plages de durées de vie de barrières thermiques EB-PVD déposées sur des superalliages polycristallins connus sous les noms de IN100 et de Hastelloy X et sur le monocristal connu sous le nom de AM1, les superalliages étant préalablement revêtus d'une sous-couche en aluminiure modifiée par le platine. L'alliage AM1 est un alliage base nickel comportant en pourcentages pondéraux 7,5% de Cr, 6,5% de Co, 2% de Mo, 8% de Ta, 5,5% de W, 1,2% de Ti, 5,3% d'Al.

L'alliage IN100 est un alliage base nickel dont la composition en pourcentages massiques est la suivante : 13 à 17% de Co, 8% à 11% de Cr, 5% à 6% de Al, 4,3% à 4,8% de Ti, 2% à 4% de Mo, 0,7% à 1,2% de V, 0,03 à 0,06% de Zr, 0,01% à 0,014% de B.

L'alliage Hastelloy X est un alliage base nickel dont la composition en pourcentages massiques est la suivante : 20,5% à 23% de Cr, 17% à 20,0% de Fe, 8% à 10% de Mo, 0,5% à 2,5% de Co, 0,2% à 1,0% de W.
La durée de vie d'une barrière thermique s'exprime en termes de nombre de cycles thermiques jusqu'à écaillage de 20% de la surface de l'éprouvette revêtue. Un cycle consiste en un palier de une heure à 1100°C avec un temps de montée en température de 5 minutes et un temps de refroidissement à une température inférieure à 100°C en 10 minutes.

La figure 1 montre que la résistance à l'écaillage d'une barrière thermique EB-PVD est plus faible sur le monocristal AM1 alors que, l'AM1 non protégé possède une tenue intrinsèque à l'oxydation bien supérieure à celle du polycristal IN100, qui est un superalliage alumino-formeur fortement chargé en titane, et à celle de l'Hastelloy X qui est un alliage chromoformeur. Par ailleurs, il a été observé que les revêtements protecteurs tels que les MCrAlY et tels que les aluminiures simples, modifiés par le chrome ou par un métal précieux, manifestent une tenue à l'oxydation sur des monocristaux très inférieure à celle observée sur des polycristaux. Par conséquent, aucun des revêtements connus, utilisé seul ou comme sous-couche de barrière thermique, ne présente une durée de vie suffisante lorsqu'il est déposé sur un superalliage monocristallin.

Par microscopie électronique à balayage, il a été observé que l'écaillage précoce d'une couche céramique EB-PVD déposée sur un superalliage monocristallin préalablement revêtu d'une sous-couche correspond à la propagation d'une fissure à l'interface entre le film d'alumine et le métal de la sous-couche. Ce type de rupture traduit un manque d'adhérence du film d'oxyde sur le métal, ce qui, à des températures supérieures à 850°C, peut être causé par la ségrégation de l'élément soufre à l'interface oxyde/sous-couche.

La teneur en soufre dans l'alliage AM1 est comprise entre 1 et 3ppm massique. Cette teneur est sensiblement plus faible que celle mesurée sur Hastelloy X (20ppm) et IN100 (6-10ppm), substrats sur lesquels la résistance à l'écaillage de la couche céramique EB-PVD est cependant meilleure.

L'invention a pour but d'améliorer la résistance à l'oxydation et à la corrosion d'une pièce en superalliage comportant un revêtement de protection anti-oxydation et optionnellement une barrière thermique.
L'invention a également pour but de réaliser des revêtements de barrière thermique dont la résistance à l'écaillage à haute température est fortement accrue.

Pour cela l'invention consiste à réduire la teneur en soufre libre conjointement dans le superalliage et dans le revêtement de protection anti-oxydation pour obtenir une concentration en soufre libre au moins inférieure à 0,8 partie par million (0,8 ppm) en poids et de préférence inférieure à 0,2ppm en poids, le revêtement de protection étant un revêtement en aluminiure.

Selon l'invention, le procédé pour améliorer la résistance à l'oxydation et à la corrosion d'une pièce en superalliage est caractérisé en ce qu'il consiste :
- à réaliser un substrat en superalliage ayant une teneur en soufre au moins inférieure à 0,8 ppm en poids,
- à déposer, sur le substrat en superalliage, un revêtement de protection anti-oxydation comportant une teneur en soufre au moins inférieure à 0,8 ppm en poids, le revêtement de protection étant un revêtement en aluminiure.

Avantageusement la teneur en soufre dans le substrat et dans le revêtement de protection est inférieure à 0,2ppm en poids.

Optionnellement, pour une application à un revêtement de barrière thermique, le procédé comporte une étape supplémentaire consistant à déposer un revêtement de céramique à structure colonnaire sur le revêtement de protection anti oxydation.

L'invention concerne également une pièce en superalliage obtenue par le procédé pour améliorer la résistance à l'oxydation et à la corrosion caractérisée en ce qu'elle comporte :
- un substrat en superalliage comportant une teneur en soufre libre au moins inférieure à 0,8ppm en poids,
- un revêtement de protection anti-oxydation comportant une teneur en soufre au moins inférieure à 0,8ppm en poids

Préférentiellement le revêtement de protection est un revêtement en aluminiure modifié par au moins un métal choisi dans le groupe constitué du nickel, du platine, du palladium, du ruthénium, du rhodium et du chrome.

Optionnellement, le revêtement de protection anti-oxydation constitue une sous-couche de barrière thermique sur laquelle est déposé un revêtement de céramique à structure colonnaire.

D'autres particularités et avantages de l'invention apparaîtront clairement dans la suite de la description donnée à titre d'exemple non limitatif et faite en regard des figures annexées qui représentent :
- La figure 1, un tableau comparatif de la durée de vie d'une barrière thermique déposée sur un superalliage monocristallin et sur un superalliage polycristallin ;
- la figure 2, un diagramme montrant l'effet de la concentration du soufre en solution dans le superalliage AM1 sur son taux de ségrégation à la surface libre de l'AM1,
- la figure 3 un diagramme synoptique de trois variantes du procédé, selon l'invention,
- la figure 4, un tableau comparatif et un diagramme montrant l'influence du taux de soufre présent dans le superalliage sur la durée de vie d'une barrière thermique déposée sur une sous-couche à faible teneur en soufre.
- la figure 5, des courbes d'évolution de masse montrant l'influence de la présence d'un revêtement anti-oxydation à faible teneur en soufre sur la durée de vie en oxydation d'un superalliage désulfuré ;
- la figure 6, un diagramme montrant la différence de durée de vie d'une barrière thermique déposée sur un alliage désulfuré en l'absence de sous-couche et en présence d'une sous-couche à basse teneur en soufre ;
- la figure 7, un tableau montrant l'influence de l'introduction d'yttrium dans le superalliage sur la teneur en soufre mesurée dans une sous-couche de barrière thermique ;
- la figure 8, un diagramme montrant l'influence de l'introduction d'yttrium dans le superalliage sur la durée de vie d'une barrière thermique déposée sur une sous-couche de platine ;
- les figures 9a et 9b, deux photos illustrant l'intérêt de la désulfuration de l'alliage et du revêtement sur la résistance à l'oxydation d'un revêtement en aluminiure modifié par le palladium et le chrome.

La sensibilité des alliages à l'impureté soufre résulte de la forte tendance de cet élément en solution à ségréger aux surfaces libres, aux joints de grains et aux interfaces incohérentes qui sont disponibles dans le matériau. Pour une concentration donnée de soufre libre dans l'alliage, la fraction de soufre ségrégé à l'interface oxyde-métal est d'autant plus élevée et critique pour l'adhérence de la couche d'oxyde que la densité de sites de ségrégation disponibles dans le superalliage revêtu d'une sous-couche de barrière thermique est faible.

C'est pourquoi la résistance à l'écaillage d'une couche céramique EB-PVD sur un alliage monocristallin est très sensible à la présence de soufre puisque l'interface entre le métal de la sous-couche et le film d'alumine constitue l'un des rares interfaces disponibles dans le matériau qui permette à l'impureté de soufre d'y ségréger. Même si une sous-couche de type aluminiure contient des grains individuels, ceux-ci sont relativement grossiers en taille, et la densité de joints de grains sur un alliage monocristallin revêtu d'un aluminiure reste très faible globalement. Dans un polycristal en revanche, l'interface oxyde/métal n'est qu'un site de ségrégation parmi beaucoup de joints de grains sur lesquels est réparti le soufre ségrégé.

Nous avons effectué des mesures de l'enthalpie libre de ségrégation du soufre à la surface libre de l'AM1 et d'un revêtement beta-NiAl. Les valeurs mesurées sont approximativement égales à -140kJ par mole. Cette valeur peut-être considérée comme une limite maximum de l'enthalpie libre de ségrégation à un interface beta-NiAl/alumine ainsi qu'à un joint de grain ou à la surface d'une porosité dans un revêtement beta-NiAl et dans l'AM1. La figure 2 montre l'effet de la concentration, Cv (en ppm atomique), du soufre en solution dans le matériau sur son taux de ségrégation à 1000°C et 1100°C calculé d'après le formalisme de Mac Lean pour une enthalpie libre de ségrégation de -140kJ/mol. Le taux de ségrégation est exprimé en pourcentage de la concentration maximale possible de soufre à la surface du matériau. Cette concentration maximale est de 0,5, c'est-à-dire un atome sur 2 dans la couche atomique qui constitue la surface libre du matériau. Au-delà d'un taux limite de ségrégation 0,1 (10%) les risques de décollement de la couche d'oxyde interfacial sont importants. On en déduit que la ségrégation du soufre à la surface d'une porosité dans le métal de la sous-couche ou à son interface avec le film d'alumine devient négligeable si la teneur résiduelle en soufre dans l'alliage et la sous-couche de barrière thermique est abaissée au niveau de quelques dixièmes de ppm.

Pour améliorer la résistance à l'oxydation et à la corrosion d'une pièce en superalliage, l'invention consiste à abaisser l'activité du soufre résiduel contenu dans l'alliage de base et à utiliser un procédé propre de dépôt du revêtement ou de la sous-couche qui n'introduise pas de soufre. La concentration de soufre libre dans le superalliage doit être au moins inférieure à 0,8 ppm en poids et, dans la version préférée de l'invention, inférieure à 0,2 ppm en poids. Cette teneur en soufre peut être obtenue de plusieurs manières :
- soit en l'éliminant par un traitement thermique de désulfuration appliqué sur le superalliage,
- soit par l'utilisation d'une coulée mère de superalliage à faible teneur en soufre,
- soit par le piégeage du soufre par l'ajout d'un élément actif tel que l'yttrium.

Ces méthodes les plus courantes sont données à titre d'exemple mais ne constituent pas en elles-même une limite au cadre de l'invention. Toute autre méthode permettant de réduire la teneur en soufre libre dans le superalliage peut être utilisée.

Les différentes étapes de fabrication de la pièce et le dépôt du revêtement ou de la sous-couche doivent être suffisamment propres pour garantir une concentration moyenne de soufre dans l'épaisseur du dépôt correspondant à la teneur résiduelle en soufre désirée. Les concentrations de soufre à ces faibles teneurs sont mesurées par spectrométrie de masse en décharge luminescente aussi désignée par l'acronyme anglais GDMS (Glow Discharge Mass Spectrometry).

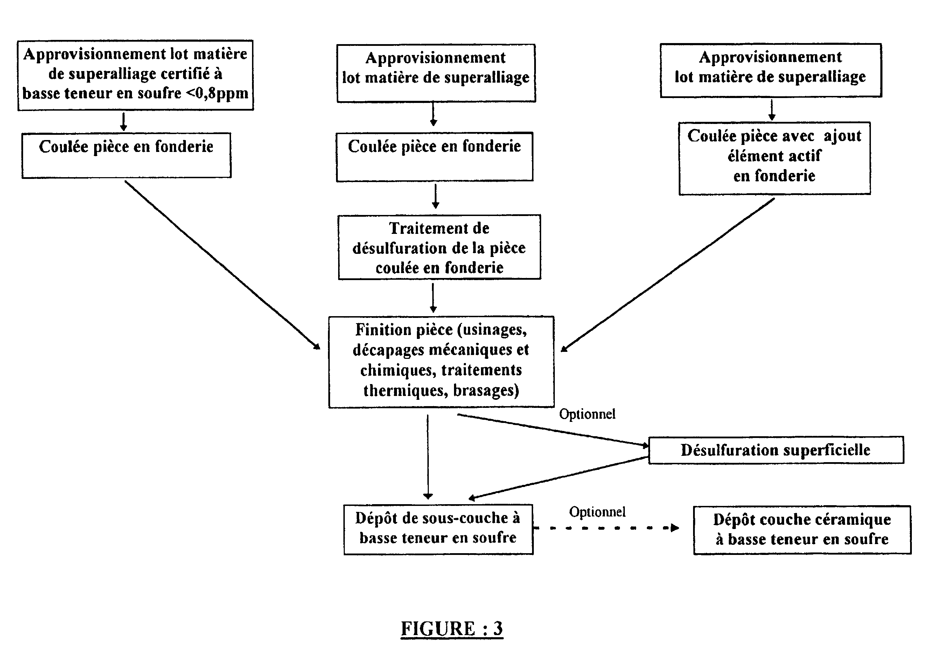

La figure 3 décrit trois procédés différents pour fabriquer des pièces telles que des distributeurs et des aubes mobiles revêtues d'un revêtement de protection ou d'une barrière thermique EB-PVD, selon la présente invention. Dans le cas présenté, le dépôt de barrière thermique est effectué en fin de procédé de fabrication. La teneur en soufre dans la céramique doit également être faible.

La première étape consiste à abaisser l'activité du soufre libre dans le superalliage.

Selon un premier mode de réalisation, cette première étape consiste à utiliser de la matière désulfurée dès son élaboration. D'un point de vue de la fabrication des pièces, cette voie rend particulièrement délicate l'étape de fonderie pendant laquelle des précautions drastiques s'imposent pour ne pas réintroduire de soufre dans l'alliage pendant la coulée de la pièce. En particulier, les matériaux réfractaires qui constituent les outillages de fonderie tels que le creuset de refusion, ainsi que les carapaces et les noyaux utilisés pour former les moules des pièces, doivent être garantis suffisamment propres pour éviter la contamination de la pièce par le soufre pendant la coulée. La pièce, une fois coulée, suit les étapes de finition classiques tels que les usinages, les décapages mécaniques et chimiques et les brasages.

Selon un deuxième mode de réalisation, la concentration de soufre libre dans l'alliage est abaissée par un traitement de désulfuration de la pièce coulée en fonderie tel que, par exemple, un traitement thermique de désulfuration à l'état solide réalisé sous hydrogène. Ce procédé de désulfuration exploite la tendance du soufre dissous dans l'alliage à ségréger à la surface du superalliage. En présence d'hydrogène aux hautes températures, le soufre localisé en surface de la pièce est évacué à la fois par la formation et la volatilisation de disulfure d'hydrogène et par simple évaporation. Le pompage du soufre effectué par l'hydrogène crée un gradient positif de la concentration du soufre dissous dans l'alliage de la surface vers le coeur de la pièce. Ce gradient de concentration conduit à la diffusion du soufre du coeur de la pièce vers la surface de la pièce. La cinétique de désulfuration étant contrôlée par la cinétique de diffusion du soufre dans l'alliage, ce procédé de désulfuration met en oeuvre des températures élevées et des temps de traitement proportionnels au carré de l'épaisseur de la pièce à désulfurer. Pour ces raisons, ce procédé n'a de sens pratique que pour des applications sur des pales d'aubes ou de distributeurs à parois minces. Il est plus adapté à des pièces aéronautiques qu'à des pièces de turbine industrielles beaucoup plus massives en général. La température de traitement doit être métallurgiquement compatible avec l'alliage de la pièce, ce qui constitue une contrainte supplémentaire. Dans le cas présenté en figure 3, le traitement de désulfuration est appliqué sur la pièce brute de fonderie en lieu et place du traitement thermique de mise en solution. Dans des conditions optimisées, quelques dizaines d'heures de maintien sous pression partielle d'hydrogène suffisent pour abaisser la concentration de soufre libre de quelques ppm à moins de 0,4ppm en poids pour une paroi d'aube en AM1 d'épaisseur inférieure à 1mm à des températures de traitement supérieures à la température de mise en solution des constituants de l'alliage en phase gamma prime et inférieures à la température de solidus. Les conditions de traitement thermique doivent être suffisamment réductrices pour empêcher la formation d'oxyde à la surface de la pièce, ce qui aurait pour effet de bloquer l'évacuation du soufre. Ce traitement thermique de désulfuration peut-être accompli en atmosphère inerte ou sous vide.

Selon un troisième mode de réalisation, pour abaisser l'activité du soufre dans l'alliage, l'invention consiste à le doper en éléments actifs interagissant avec le soufre pour le piéger au coeur de l'alliage. Le mécanisme de piégeage du soufre consiste en la formation de sulfures et d'oxysulfures suffisamment stables à la température de fonctionnement pour que la teneur de soufre libre en solution soit suffisamment faible à cette température de fonctionnement. Une des difficultés de ce mode de réalisation provient de la forte réactivité des éléments actifs avec les matériaux réfractaires utilisés en fonderie. La disparition des éléments actifs par combinaison avec les matériaux réfractaires utilisés en fonderie rend difficile la maîtrise du dosage de leur concentration résiduelle dans la pièce. La méthode préférée consiste à introduire l'élément actif au moment de la refusion de l'alliage pendant l'opération de la coulée de la pièce en fonderie. Cette méthode permet d'adapter la quantité d'élément actif à ajouter en fonction de la géométrie et de l'épaisseur de paroi de la pièce. Les teneurs résiduelles en éléments actifs souhaitées dans la pale des pièces varie typiquement entre 10 et 100ppm pour un alliage contenant initialement 1 à 3ppm de soufre.
A l'issue de la première étape, des opérations de finition sont effectuées sur la pièce obtenue.

Les opérations de finition consistent à tremper les pièces dans des bains d'usinage huileux ou de décapage acido-basique. Des montées en température dues à l'échauffement par usinage ou à des traitements thermiques divers peuvent également intervenir. La pollution en soufre introduite par ces différentes étapes de finition reste superficielle puisqu'elle ne concerne que quelques microns en épaisseur. Une pollution typique de 30ppm en moyenne sur une profondeur de 5 microns est cependant inacceptable puisqu'elle équivaut à augmenter la teneur moyenne en soufre de +0,2ppm dans une paroi d'aube d'épaisseur 0,8mm. Il peut donc s'avérer nécessaire de procéder à une étape de désulfuration de la région superficielle de la pièce avant de procéder au dépôt de la sous-couche.

L'étape optionnelle de désulfuration superficielle a pour objet d'évacuer le soufre introduit dans la région superficielle de la pièce pendant les opérations de finition. Le procédé préféré pour désulfurer superficiellement la pièce consiste à lui appliquer, dans un état désoxydé, un traitement thermique non-oxydant de 2 heures à 850°C sous vide ou sous pression partielle d'argon et/ou d'hydrogène. A 850°C, le coefficient de diffusion du soufre dans un alliage base nickel, est suffisant pour désulfurer l'alliage sur une profondeur de quelques microns.

La deuxième étape du procédé selon l'invention, consiste à réaliser un revêtement de protection ou une sous-couche de barrière thermique à faible teneur en soufre. Cette étape demande beaucoup de vigilance pour ne pas introduire de soufre dans le dépôt. Les procédés mis en oeuvre dans la réalisation de revêtements anti-oxydation ou de sous-couche de barrières thermiques fait intervenir des opérations telles que:
- les dégraissages chimiques (bains acides ou basiques),
- les décapages mécaniques (sablage, polissage,...)
- les dépôts électrolytiques de nickel ou de métaux précieux,
- les traitements thermochimiques (aluminisation, chromisation).
- les traitements thermiques
- le dépôt chimique en phase vapeur (CVD).

Chaque opération peut introduire une contamination en soufre du revêtement pendant son élaboration.

Par exemple, des teneurs en soufre de plusieurs ppm en poids ont été mesurées par GDMS dans des dépôts électrochimiques de platine ou de nickel-palladium à l'état brut de dépôt. Nous avons également constaté que les procédés thermochimiques de chromisation ou d'aluminisation peuvent apporter une quantité non négligeable de soufre dans le dépôt.

De telles teneurs sont inacceptables car elles contribuent à polluer en soufre, de façon très significative, le revêtement anti-oxydation ou la sous-couche de barrière thermique dans son état final d'élaboration.

Le soufre contenu dans un dépôt électrolytique provient de la préparation de surface de la pièce effectuée avant le dépôt électrolytique et du dépôt électrolytique lui-même. Pour diminuer la pollution par le soufre, les teneurs des espèces soufrées (ions sulfates et sulfites) présentes dans les bains utilisés pour les décapages et dégraissages chimiques doivent être inférieures à 1ppm en poids. Pour le dépôt électrolytique, il est crucial d'éviter le piégeage d'espèces soufrées pendant l'élaboration du revêtement. Les sels de métaux ainsi que les solutions utilisés pour constituer le bain de dépôt doivent être suffisamment purs pour que leur teneur en soufre soit inférieure à 10ppm en poids et de préférence inférieure à 5ppm en poids. Si ces conditions sont respectées, la teneur en soufre dans le dépôt électrolytique à l'état brut peut être inférieure à 1ppm en poids.

Alternativement ou conjointement à l'utilisation d'un bain électrolytique de haute pureté, le dépôt électrolytique d'une épaisseur comprise entre 5 et 15 microns peut être partiellement désulfuré à l'état solide pendant le traitement thermique de diffusion effectué après le dépôt électrolytique. Un tel traitement précède l'étape d'aluminisation pour les aluminiures modifiés par des métaux précieux et est aussi utilisé pour les sous-couches élaborées par l'interdiffusion entre un métal précieux et l'alliage de base. Usuellement ce traitement thermique de diffusion est accompli sous vide ou sous une pression partielle d'un gaz inerte à une température comprise entre 850°C et 1200°C pendant un temps de 1 à 3 heures. Pour diminuer la pollution par le soufre, une modification de ce traitement thermique de diffusion consiste à introduire un balayage de gaz hydrogéné entre 5 et 10 % de très haute pureté (teneur en H₂S inférieure à 1ppb en poids) à une pression comprise entre 10⁻² et 10 Torr en utilisant un four à parois froides. La présence d'hydrogène pendant le traitement thermique permet d'éliminer partiellement le soufre résiduel contenu dans le dépôt électrolytique.

Pour les revêtements de type aluminiures utilisés comme sous-couche de barrière thermique, le traitement thermique sous pression partielle d'hydrogène décrit ci-dessus peut également être réalisé après l'étape d'aluminisation, et avant le dépôt de la couche de céramique.

Les procédés thermochimiques de chromisation et d'aluminisation sont également responsables d'un apport de soufre dans la sous-couche. Dans un procédé d'aluminisation ou de chromisation, le donneur d'aluminium, respectivement de chrome, est placé avec les pièces à traiter dans un réacteur avec une certaine quantité d'activateur. La fonction de l'activateur est de transporter l'aluminium, respectivement le chrome, du donneur à la surface des pièces à traiter. Les activateurs utilisés sont des composés halogénés, typiquement des chlorures ou des fluorures d'ammonium, d'aluminium ou de chrome. Le traitement est accompli en milieu réducteur à pression atmosphérique ou à pression réduite avec un gaz inerte mélangé éventuellement avec de l'hydrogène, ou encore sous hydrogène pur. Les températures de traitement sont comprises entre 850°C et 1200°C pendant plusieurs heures. A ces températures, les matériaux utilisés pour traiter les pièces (outillage, cément (donneur), activateur) constituent potentiellement des sources de contamination du dépôt par le soufre. La teneur en soufre de ces sources est de l'ordre de la centaine de ppm en poids, ce qui est très élevé en regard de la propreté de la sous-couche recherchée. En présence d'hydrogène par exemple, les sources de soufre réagissent pour donner naissance à une pression partielle de disulfure d'hydrogène pendant l'aluminisation ou la chromisation des pièces. Cette pression partielle de disulfure d'hydrogène mène à l'adsorption de soufre à la surface des pièces. Le soufre adsorbé est alors incorporé dans le revêtement pendant la croissance du dépôt.

Une première méthode pour minimiser l'apport de soufre dans le revêtement lors de la chromisation ou de l'aluminisation consiste à abaisser la teneur en soufre contenue dans les sources de contamination. Pour cela, la désulfuration des outillages est effectuée par un traitement thermique sous hydrogène par exemple et l'abaissement du taux de soufre libre dans le cément est réalisé. Le cément qui est un alliage de chrome, d'aluminium ou de nickel sous forme de poudre ou de granulés peut être allié avec quelques pour-cents d'yttrium ou autres éléments actifs pour piéger le soufre résiduel.

Une deuxième méthode qui peut être utilisée conjointement à la précédente consiste à abaisser la pression partielle de disulfure d'hydrogène par l'utilisation d'un élément chimique piégeur (getter en anglais) qui réagit avec le soufre pour former des sulfures stables à la température de traitement.

L'élément piégeur de soufre peut être métallique auquel cas le métal utilisé doit être inerte vis à vis des halogénures utilisés pour ne pas contaminer le dépôt. Des alliages contenant du zirconium ou du titane constituent de bons piégeurs. Le piégeur de soufre peut être également un oxyde formant des oxysulfures, par exemple par l'utilisation d'yttrine mélangée au cément.

Dans les exemples qui suivent sont décrites différentes expérimentations qui illustrent tout l'intérêt de la présente invention.

### EXEMPLE 1

A partir d'un barreau d'AM1 coulé et mis en solution 3 heures à 1300°C sous pression partielle d'argon, des éprouvettes ont été découpées sous forme de disques d'un millimètre d'épaisseur et de diamètre 25mm. La teneur en soufre des disques mesurée par GDMS est égale à 0,85ppm. Une moitié des éprouvettes a subi un traitement de désulfuration à l'état solide par un traitement thermique sous hydrogène comme décrit ci-dessus pour abaisser la concentration en soufre libre dans le superalliage AM1. La température et la durée du traitement étaient respectivement de 1300°C et de 30 heures sous une légère surpression d'argon hydrogéné à 10%. La teneur résiduelle de soufre mesurée dans les pastilles désulfurées est égale à 0,2ppm.

Les deux lots d'éprouvettes (désulfurées et non-désulfurées) ont ensuite été traitées en un seul lot pour un dépôt de barrière thermique EB-PVD avec une sous-couche de type aluminiure modifiée par le platine. Le procédé de dépôt de la sous-couche consiste en un pré-dépôt électrolytique de platine de quelques microns d'épaisseur suivi d'un traitement de diffusion de 1 heure à 1100°C et d'une aluminisation basse activité à une température de 5 heures à 1100°C. Le pré-dépôt de platine et l'aluminisation sous balayage d'hydrogène sont réalisées dans des conditions visant à minimiser l'apport de soufre.

Des analyses de soufre par GDMS ont été réalisées pour les sous-couches d'aluminiure de platine déposées sur les éprouvettes en AM1 standard et désulfuré. Les analyses sont réalisées à différentes profondeurs dans la sous-couche en procédant à des polissages successifs. Le taux de soufre à travers la sous-couche déposée sur AM1 standard varie entre 0,2 et 0,9ppm en poids avec une valeur moyenne de 0,5ppm. Sur l'AM1 désulfuré, le taux de soufre varie entre 0,2 et 0,7ppm en poids avec une valeur moyenne de l'ordre de 0,3ppm. Bien que le procédé de dépôt de sous-couche ait été rigoureusement le même pour toutes les éprouvettes, une partie du soufre contenu dans l'alliage de base a diffusé à travers la sous-couche pendant l'étape d'aluminisation, avec pour conséquence une teneur supérieure dans les sous-couches en aluminiure formées sur les substrats non désulfurés.

L'une des faces des éprouvettes a ensuite été recouverte d'une couche céramique EB-PVD d'épaisseur 125 microns et de composition ZrO₂-8% Y₂O₃ en masse.

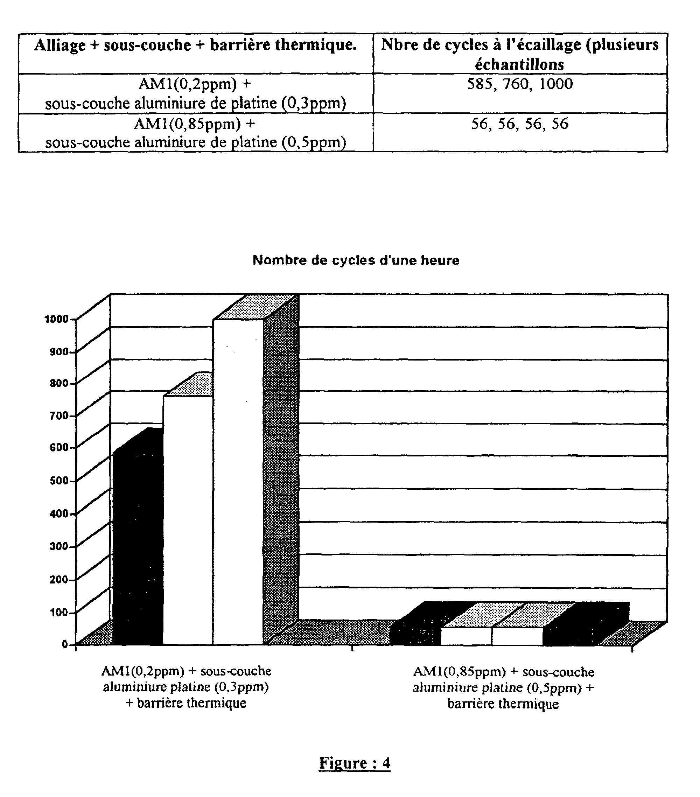

La résistance à l'écaillage de la couche céramique a été évaluée en soumettant les éprouvettes à un cyclage thermique oxydant. Un cycle a une durée totale de 75 minutes dont 60 minutes de palier à 1100°C avec retour à la température ambiante par convection forcée. Le test est arrêté quand 20% de la surface revêtue de l'éprouvette s'est écaillée. A la figure 4 sont présentés les résultats de cyclage obtenus sur 3 ou 4 éprouvettes.

Une analyse réalisée par microscopie électronique, montre que, sur les éprouvettes en alliage non désulfuré, l'écaillage se produit essentiellement par fissuration à l'interface entre le métal de la sous-couche et le film d'alumine. Le manque d'adhérence oxyde/métal est dû à un phénomène de ségrégation du soufre. Sur les éprouvettes désulfurées en revanche, l'écaillage se produit d'une part, par rupture cohésive dans l'alumine et dans la couche céramique près de l'interface et d'autre part, par propagation à l'interface alumine/sous-couche.

Cette expérience montre que l'utilisation d'un revêtement protecteur déposé dans des conditions où la teneur de soufre ajoutée est strictement contrôlée ne suffit pas à obtenir des résultats satisfaisants et que l'utilisation conjointe d'un alliage à basse teneur en soufre libre et d'un revêtement à basse teneur en soufre est nécessaire pour améliorer considérablement la résistance à l'écaillage d'une barrière thermique. Une sous-couche d'aluminiure à basse teneur en soufre déposée sur un alliage désulfuré possède une tenue à l'oxydation renforcée par rapport à la même sous-couche déposée sur un alliage non désulfuré.

### EXEMPLE 2

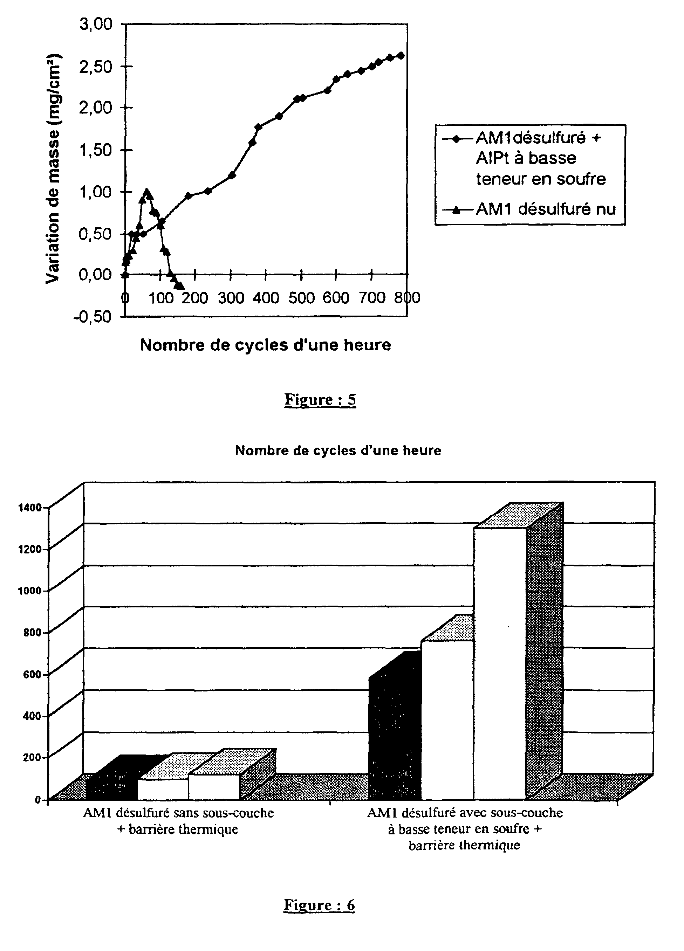

Des pastilles d'un diamètre 12 mm et d'épaisseur 1mm ont été usinées à partir d'un barreau coulé d'AM1. Elles ont subi un traitement de désulfuration tel que celui décrit dans l'exemple 1. Une première partie des éprouvettes désulfurées a été revêtue d'une sous-couche d'aluminiure modifié par le platine, la sous-couche contenant une teneur en soufre inférieure à 0,2 ppm en poids. La deuxième partie des éprouvettes est restée nue. Les pastilles ont ensuite été testées en oxydation cyclée à l'air atmosphérique selon les conditions décrites dans l'exemple 1. Les éprouvettes ont été pesées périodiquement. Les variations de masse par unité de surface sont présentées en figure 5. Il est connu que pour un alliage aluminoformeur, l'épaisseur moyenne d'alumine formée (en microns) en l'absence d'écaillage est proportionnelle à la prise de masse (mg/cm2), le coefficient de proportionnalité étant égal à 5,339. Au bout de 60 cycles, la variation de masse de l'alliage nu désulfuré passe par un maximum de 1mg/cm² (correspondant à 5,3 microns d'alumine). Au bout de 130 cycles, la variation de masse est à nouveau nulle. A ce stade au moins 5 µm d'oxyde se sont donc détachés de la surface. Si l'échantillon avait été revêtu d'une barrière thermique, comme décrit dans le brevet US 5.538.796, la durée de vie du revêtement n'aurait pu excéder 130 cycles. Sur l'alliage désulfuré recouvert d'une sous-couche à basse teneur en soufre, il faut attendre plus de 700 cycles pour observer une perte de masse correspondant à l'écaillage de l'oxyde. Ceci montre d'une part, que le revêtement anti-oxydation selon l'invention est particulièrement efficace, et d'autre part qu'en présence d'une couche de barrière thermique, il offre un potentiel de durée de vie à l'écaillage bien supérieur à celui décrit dans le brevet US 5.538.796 .

La durée de vie de la couche céramique, en termes de nombre de cycles jusqu'à écaillage de 20% de la surface revêtue de l'éprouvette, est supérieure à 500 cycles avec une sous-couche d'aluminiure platine à basse teneur en soufre (0,3ppm) sur AM1 désulfuré (0,2ppm).

### EXEMPLE 3

Les pastilles d'alliage AM1 désulfurées avec et sans sous-couche décrites dans l'exemple 2 ont été recouvertes d'une barrière thermique en zircone yttriée d'épaisseur 125 µm déposée par EB-PVD. Ces éprouvettes ont été cyclées en four selon le procédé décrit dans l'exemple 1. Les durées de vie en cyclage sont représentées sur la figure 6. Cette figure montre que les revêtements de barrière thermique selon l'invention se comportent mieux que les revêtements de barrière thermique décrits dans le brevet US 5.538.796.

### EXEMPLE 4

Des éprouvettes sous forme de pastilles ont été préparées à partir d'un barreau d'AM1 standard et d'un barreau dopé avec 300ppm massique d'yttrium. Le taux de soufre total mesuré dans ces barreaux est égal à 2,6ppm en poids. Sur ces éprouvettes, deux types de sous-couche ont été déposés :
- une sous-couche de platine standard obtenue en effectuant un dépôt électrolytique de platine sur le superalliage AM1 puis en effectuant un recuit de diffusion de ce dépôt.
- une sous-couche de platine à basse teneur en soufre obtenue en éliminant l'apport de soufre au cours du dépôt électrolytique de platine par utilisation d'un bain de platine à faible teneur en soufre, puis en effectuant un recuit de diffusion de ce dépôt sous une atmosphère hydrogénée.

Ces deux sous-couches ont été appliquées sur des éprouvettes en AM1 standard et en AM1 dopé à l'yttrium.

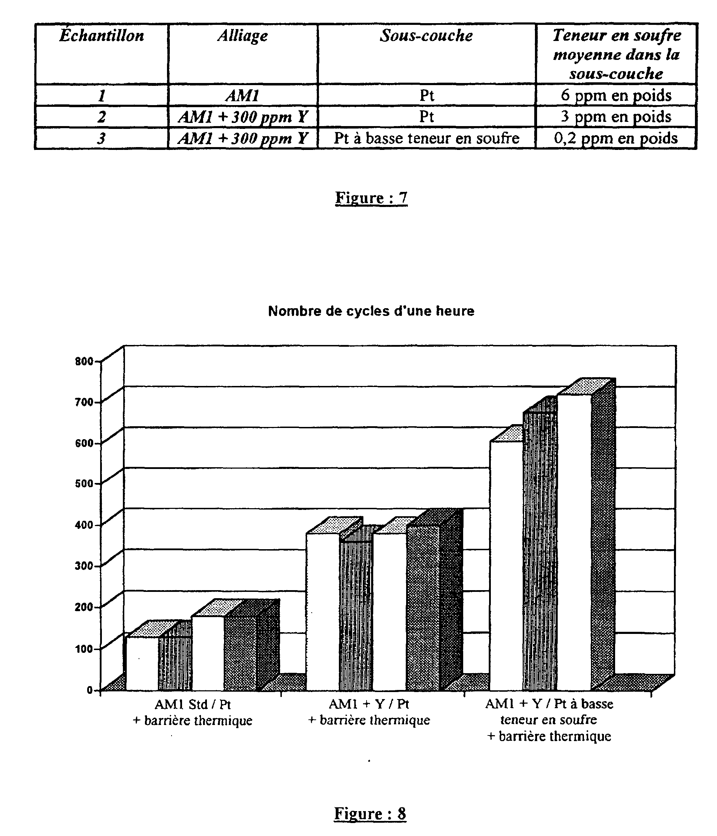

Des analyses GDMS ont été effectuées sur les sous-couches de platine déposées sur l'AM1 standard et sur l'AM1+Y ainsi que sur la sous-couche Platine à basse teneur en soufre déposée sur l'AM1+Y. L'analyse a été maintenue pendant 2 heures au cours desquelles 5 mesures ont été enregistrées au fur et à mesure que la surface de la sous-couche était érodée par la décharge luminescente lors de l'analyse GDMS. Les valeurs moyennes de la teneur en soufre déterminées au travers d'un cratère de plusieurs microns de profondeur sont indiquées à la figure 7.

Parmi ces échantillons, seuls les échantillons 3 correspondent à notre invention puisqu'ils utilisent un alliage AM1 à bas taux de soufre libre conjointement avec un revêtement protecteur ou une sous-couche de barrière thermique à basse teneur en soufre.

Ces résultats montrent que la présence d'yttrium dans l'alliage empêche l'enrichissement en soufre du dépôt électrolytique de platine lors du recuit de diffusion de ce dernier. Le soufre de l'alliage est piégé par l'yttrium et ne diffuse pas vers le platine.

Une barrière thermique en zircone yttriée de 125µm d'épaisseur a été appliquée sur ces échantillons par EB-PVD et la résistance à l'écaillage de la céramique EB-PVD a été évaluée en cyclage thermique dans les conditions standards décrites dans l'exemple 1. Les résultats sont représentés à la figure 8.

Le piégeage du soufre dans l'alliage AM1 par l'addition d'élément actif, tel que l'yttrium, n'améliore pas de façon suffisante la performance de la sous-couche de platine pour l'accrochage de la couche céramique EB-PVD. Le piégeage du soufre par l'yttrium dans l'alliage AM1 ne suffit pas à supprimer le phénomène de ségrégation du soufre à l'interface alumine/métal, l'apport de soufre dans la sous-couche étant dû au procédé de dépôt. Avec une sous-couche de platine seul à basse teneur en soufre déposée sur l'AM1+Y, selon la présente invention, on obtient en revanche des résultats nettement supérieurs.

### EXEMPLE 5

Des éprouvettes en alliage AM1 standard et en alliage AM1 désulfuré à l'état solide selon le procédé de désulfuration décrit dans l'exemple 1 ont été réalisées sous forme de pastilles de diamètre 25mm. La teneur en soufre libre résiduel des éprouvettes désulfurées est comprise entre 0,12 et 0,16 ppm en poids.

Des dépôts d'aluminiures modifiés par le palladium et par le chrome ont été réalisés sur ces deux types d'éprouvettes. Un pré-dépôt de palladium-nickel (80/20 % poids) est d'abord déposé électrolytiquement sur l'alliage, suivi d'un traitement thermique de diffusion. Les éprouvettes sont ensuite chromisées et aluminisées suivant un procédé en phase vapeur décrit ci-dessus. Ces revêtements sont déposés sur les éprouvettes en AM1 standard et désulfuré en utilisant des procédés électrolytiques et thermochimiques classiques et à basse teneur en soufre. Trois types d'éprouvettes ont été réalisés :
1. AM1 standard + revêtement d'aluminiure modifié par Pd et Cr classique,
2. AM1 désulfuré + revêtement d'aluminiure modifié par Pd et Cr classique,
3. AM1 désulfuré + revêtement d'aluminiure modifié par Pd et Cr à basse teneur en soufre.

Sur ces éprouvettes ont été déposés par EB-PVD des revêtements céramiques de type barrière thermique en zircone yttriée d'épaisseur 125 µm. Les revêtements obtenus ont été testés en condition de cyclage thermique selon les conditions de tests décrites dans l'exemple 1.

Les résultats obtenus pour les éprouvettes de type 2 et 3 ont montrés que les durées de vie des barrières thermiques ont été multipliées respectivement par 1,5 et par 5 par rapport aux éprouvettes de type 1.

Cet exemple illustre une fois de plus la nécessité de combiner la désulfuration de l'alliage de base avec un procédé de dépôt de la sous-couche AlPdCr introduisant peu de soufre libre dans le revêtement final.

### EXEMPLE 6

Dans cet exemple, il a été procédé comme dans l'exemple précédent mais l'étape finale de dépôt de revêtement céramique a été omise. Des échantillons comportant les revêtements anti-oxydation suivants ont été réalisés :
1. AM1 standard + revêtement d'aluminiure modifié par Pd et Cr classique
2. AM1 désulfuré + revêtement d'aluminiure modifié par Pd et Cr à basse teneur en soufre.

Ces échantillons ont été soumis à des cyclages thermiques à 1100°C selon la procédure décrite dans l'exemple 2.

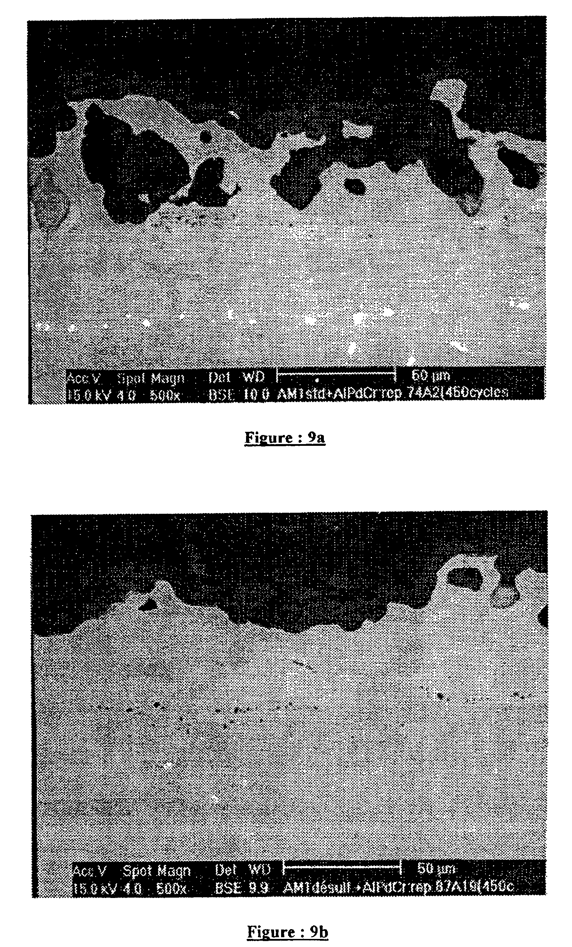

Les figures 9a et 9b montrent l'effet de la désulfuration de l'alliage de base sur la durée de vie du revêtement AlPdCr après plus de 400 cycles d'oxydation à 1100°C. En figure 9a le revêtement déposé sur l'AM1 standard montre une oxydation interne du dépôt. En figure 9b Le revêtement AlPdCr déposé sur AM1 désulfuré en revanche ne comporte pratiquement pas de cavités oxydées. Après 450 cycles, il possède encore un bon potentiel de durée de vie. Cet exemple illustre la valeur ajoutée de la désulfuration sur la résistance à l'oxydation du revêtement protecteur AlPdCr. L'effet du soufre sur la cavitation observée dans le revêtement favorise la coalescence des lacunes associées à la diffusion de l'aluminium et du nickel et favorise leur croissance en macroporosités.

## Revendications

1. Procédé pour améliorer la résistance à l'oxydation et à la corrosion d'une pièce en superalliage à base de nickel et/ou de cobalt et/ou de fer, **caractérisé en ce qu'**il consiste :
- à réaliser un substrat en superalliage ayant une teneur en soufre au moins inférieure à 0,8ppm en poids,
- à déposer, sur le substrat en superalliage, un revêtement de protection anti-oxydation comportant une teneur en soufre au moins inférieure à 0,8ppm en poids, le revêtement de protection étant un revêtement en aluminiure.

2. Procédé selon la revendication 1, **caractérisé en ce que** la teneur en soufre dans le substrat et dans le revêtement de protection est inférieure à 0,2 ppm en poids;

3. Procédé selon les revendications 1 ou 2 **caractérisé en ce que** la réalisation du substrat en superalliage consiste :
- à s'approvisionner en un lot de matière de superalliage contenant une teneur en soufre inférieure à 0,8ppm en poids
- à couler la pièce en fonderie en utilisant des outillages de fonderie non contaminés par le soufre.

4. Procédé selon les revendications 1 ou 2, **caractérisé en ce que** la réalisation du substrat en superalliage consiste :
- à s'approvisionner en un lot de matière du superalliage,
- à couler la pièce en fonderie et à introduire un élément actif dans l'alliage refondu pendant la coulée de la pièce, l'élément actif étant choisi dans le groupe composé des lanthanides, de l'yttrium, du hafnium, du zirconium et d'une combinaison de ces éléments.

5. Procédé selon les revendications 1 ou 2, **caractérisé en ce que** la réalisation du substrat en superalliage consiste :
- à s'approvisionner en un lot de matière en superalliage
- à effectuer une coulée de la pièce en fonderie,
- à effectuer un traitement thermique de désulfuration de la pièce coulée, le traitement thermique étant réalisé sous atmosphère neutre ou hydrogénée.

6. Procédé selon l'une quelconque des revendications 1 à 5, **caractérisé en ce que** l'étape de dépôt du revêtement de protection anti-oxydation consiste :
- à effectuer un dépôt électrolytique d'un métal précieux en utilisant un bain électrolytique de sels de métaux
- à effectuer un traitement thermique de diffusion sous atmosphère hydrogénée.

7. Procédé selon l'une quelconque des revendications 1 à 5, **caractérisé en ce que** l'étape de dépôt du revêtement de protection anti-oxydation consiste :
- à effectuer un dépôt électrolytique d'un métal précieux en utilisant un bain électrolytique de sels de métaux dont la teneur en soufre est inférieure à 10ppm en poids,
- à effectuer un traitement thermique de diffusion sous atmosphère neutre ou hydrogénée.

8. Procédé selon la revendication 7, **caractérisé en ce que** le bain électrolytique de sels de métaux a une teneur en soufre inférieure à 5ppm en poids.

9. Procédé selon l'une quelconque des revendications 6 à 8, **caractérisé en ce qu'**il consiste en outre à effectuer un traitement de chromisation et/ou d'aluminisation dans lequel un cément est allié avec un élément actif choisi dans le groupe composé des lanthanides, de l'yttrium, du hafnium, du zirconium et d'une combinaison de ces éléments.

10. Procédé selon l'une quelconque des revendications 6 à 8, **caractérisé en ce que** l'étape de dépôt du revêtement de protection anti-oxydation comporte en outre une étape de chromisation et/ou d'aluminisation dans laquelle un cément est mis en présence d'un élément piégeur de soufre, cet élément étant inerte vis à vis des composés halogénés utilisés comme activateurs pendant cette étape de chromisation et/ou d'aluminisation.

11. Procédé selon la revendication 10, **caractérisé en ce que** l'élément piégeur de soufre est choisi parmi les alliages contenant du zirconium, des alliages contenant du titane, des oxydes aptes à se combiner avec le soufre pour former des oxysulfures.

12. Procédé selon l'une quelconque des revendications précédentes, **caractérisé en ce que** le revêtement de protection anti-oxydation constitue une sous-couche de barrière thermique sur laquelle est déposée une couche de céramique à structure colonnaire.

13. Pièce en superalliage obtenue par le procédé selon l'une quelconque des revendications précédentes, **caractérisé en ce qu'**elle comporte :
- un substrat en superalliage comportant une teneur en soufre libre au moins inférieure à 0,8ppm en poids,
- un revêtement de protection anti-oxydation comportant une teneur en soufre au moins inférieure à 0,8 ppm en poids, le revêtement de protection étant un revêtement en aluminiure.

14. Pièce en superalliage selon la revendication 13, **caractérisée en ce que** la teneur en soufre dans le substrat et dans le revêtement de protection est inférieure à 0,2ppm en poids.

15. Pièce en superalliage selon la revendication 14, **caractérisé en ce que** le revêtement en aluminiure comporte au moins un métal choisi dans le groupe composé du nickel, du platine, du palladium, du ruthénium, du rhodium et du chrome.

16. Pièce en superalliage selon l'une quelconque des revendications 13 à 15, **caractérisé en ce que** le revêtement de protection constitue une sous-couche de barrière thermique et est revêtu par une couche de céramique à structure colonnaire.

17. Pièce en superalliage selon la revendication 16, **caractérisé en ce que** la couche de céramique est en zircone stabilisée par de l'oxyde d'yttrium.

18. Pièce en superalliage selon les revendications 16 ou 17, **caractérisée en ce que** la couche de céramique est déposée par dépôt physique en phase vapeur sous faisceau d'électrons.

## Patentansprüche

1. Verfahren zur Verbesserung der Oxidations- und Korrosionsbeständigkeit eines Werkstücks aus einer Superlegierung auf Nickel- und/oder Kobalt- und/oder Eisenbasis, **dadurch gekennzeichnet, daß** es darin besteht,
- ein Substrat aus Superlegierung herzustellen mit einem Schwefelgehalt, dessen Gewichtsanteil zumindest unter 0,8 ppm liegt,
- auf dem Substrat aus Superlegierung eine Antioxidations-Schutzschicht abzulagern, die einen Schwefelgehalt hat, dessen Gewichtsanteil zumindest unter 0,8 ppm liegt, wobei die Schutzschicht eine Aluminidschicht ist.

2. Verfahren nach Anspruch 1, **dadurch gekennzeichnet, daß** der Gewichtsanteil des Schwefelgehalts in dem Substrat und in der Schutzschicht unter 0,2 ppm liegt.

3. Verfahren nach Anspruch 1 oder 3, **dadurch gekennzeichnet, daß** die Herstellung des Substrats aus Superlegierung darin besteht,
- eine Charge an Superlegierungsmaterial bereitzustellen, das einen Schwefelgehalt hat, dessen Gewichtsanteil unter 0,8 ppm liegt,
- das Werkstück zu gießen, wobei Gießwerkzeuge benutzt werden, die nicht mit Schwefel kontaminiert sind.

4. Verfahren nach Anspruch 1 oder 2, **dadurch gekennzeichnet, daß** die Herstellung des Substrats aus Superlegierung darin besteht,
- eine Charge an Superlegierungsmaterial bereitzustellen,
- das Werkstück zu gießen und während des Gießens des Werkstücks ein aktives Element in die geschmolzene Superlegierung einzubringen, wobei das aktive Element aus der Gruppe ausgewählt ist, die aus Lanthaniden, Yttrium, Hafnium, Zirkonium und einer Kombination dieser Elemente besteht.

5. Verfahren nach Anspruch 1 oder 2, **dadurch gekennzeichnet, daß** die Herstellung des Substrats aus Superlegierung darin besteht,
- eine Charge an Superlegierungsmaterial bereitzustellen,
- den Guß des Werkstücks durchzuführen,
- eine thermische Behandlung zur Entschwefelung des gegossenen Werkstücks durchzuführen, wobei diese thermische Behandlung in einer neutralen oder mit Wasserstoff angereicherten Atmosphäre durchgeführt wird.

6. Verfahren nach einem der Ansprüche 1 bis 5, **dadurch gekennzeichnet, daß** der Verfahrensschritt des Ablagerns der Antioxidations-Schutzschicht darin besteht,
- eine elektrolytische Ablagerung eines Edelmetalls durchzuführen, wobei ein elektrolytisches Metallsalzbad benutzt wird,
- eine thermische Diffusionsbehandlung in einer mit Wasserstoff angereicherten Atmosphäre durchzuführen.

7. Verfahren nach einem der Ansprüche 1 bis 5, **dadurch gekennzeichnet, daß** der Verfahrensschritt des Ablagerns der Antioxidations-Schutzschicht darin besteht,
- eine elektrolytische Ablagerung eines Edelmetalls durchzuführen, wobei ein elektrolytisches Metallsalzbad mit einem Schwefelgehalt benutzt wird, dessen Gewichtsanteil unter 10 ppm liegt,
- eine thermische Diffusionsbehandlung in einer neutralen oder mit Wasserstoff angereicherten Atmosphäre durchzuführen.

8. Verfahren nach Anspruch 7, **dadurch gekennzeichnet, daß** das elektrolytische Metallsalzbad einen Schwefelgehalt hat, dessen Gewichtsanteil unter 5 ppm liegt.

9. Verfahren nach einem der Ansprüche 6 bis 8, **dadurch gekennzeichnet, daß** es außerdem darin besteht, eine Chromatierungs- und/oder Aluminisierungsbehandlung durchzuführen, bei der ein Zementationsmittel legiert wird mit einem aktiven Element, das aus der Gruppe ausgewählt ist, die aus Lanthaniden, Yttrium, Hafnium, Zirkonium und einer Kombination dieser Elemente besteht.

10. Verfahren nach einem der Ansprüche 6 bis 8, **dadurch gekennzeichnet, daß** der Verfahrensschritt des Ablagerns der Antioxidations-Schutzschicht außerdem einen Verfahrensschritt des Chromatierens und/oder des Aluminisierens umfaßt, in dem in Anwesenheit eines Schwefelabscheidungselements ein Zementationsmittel eingebracht wird, wobei dieses Element gegenüber den halogenisierten Komponenten inert ist, die während dieses Verfahrensschrittes des Chromatierens und/oder des Aluminisierens als Aktivierungsmittel benutzt werden.

11. Verfahren nach Anspruch 10, **dadurch gekennzeichnet, daß** das Schwefelabscheidungselement aus den Legierungen ausgewählt ist, die Zirkonium enthalten, Legierungen, die Titan enthalten, Oxiden, die sich mit Schwefel zur Bildung von Oxisulfiden verbinden können.

12. Verfahren nach einem der vorhergehenden Ansprüche, **dadurch gekennzeichnet, daß** die Antioxidations-Schutzschicht eine Unterschicht als thermische Barriere bildet, auf der eine Keramikschicht mit Säulenstruktur abgelagert wird.

13. Werkstück aus Superlegierung, das durch das Verfahren nach einem der vorhergehenden Ansprüche gewonnen wird, **dadurch gekennzeichnet, daß** es aufweist::
- ein Substrat aus Superlegierung mit einem Gehalt an freiem Schwefel, dessen Gewichtsanteil zumindest unter 0,8 ppm liegt,
- eine Antioxidations-Schutzschicht mit einem Schwefelgehalt, dessen Gewichtsanteil zumindest unter 0,8 ppm liegt, wobei die Schutzschicht eine Aluminidschicht ist.

14. Werkstück aus Superlegierung nach Anspruch 13, **dadurch gekennzeichnet, daß** der Gewichtsanteil des Schwefelgehalts in dem Substrat und in der Schutzschicht unter 0,2 ppm liegt.

15. Werkstück aus Superlegierung nach Anspruch 15, **dadurch gekennzeichnet, daß** die Aluminid-Schicht wenigstens ein Metall enthält, das aus der Gruppe ausgewählt ist, die aus Nickel, Platin, Palladium, Ruthenium, Rhodium und Chrom besteht.

16. Werkstück aus Superlegierung nach einem der Ansprüche 13 bis 15, **dadurch gekennzeichnet, daß** die Schutzschicht eine Unterschicht als thermische Barriere bildet und mit einer Keramikschicht mit Säulenstruktur beschichtet ist.

17. Werkstück aus Superlegierung nach Anspruch 16, **dadurch gekennzeichnet, daß** Keramikschicht aus Zirkon besteht, das durch Yttriumoxid stabilisiert ist.

18. Werkstück aus Superlegierung nach einem der Ansprüche 16 oder 17, **dadurch gekennzeichnet, dass** die Keramikschicht durch physikalische Ablagerung in der Dampfphase durch einen Elektronenstrahl abgelagert ist.

## Claims

1. Process for improving the oxidation and corrosion resistance of a part made of a superalloy based on nickel and/or cobalt and/or iron, **characterized in that** it consists:
- in producing a substrate made of a superalloy having a sulphur content of at least less than 0.8 ppm by weight; and
- in depositing, on the superalloy substrate, an anti-oxidation protective coating having a sulphur content of at least less than 0.8 ppm by weight, the protective coating being an aluminide coating.

2. Process according to Claim 1, **characterized in that** the sulphur content in the substrate and in the protective coating is less than 0.2 ppm by weight.

3. Process according to either of Claims 1 and 2, **characterized in that** the production of the superalloy substrate consists:
- in providing, as one batch of material, a superalloy having a sulphur content of less than 0.8 ppm by weight; and
- in foundry casting the part using foundry tooling not contaminated by sulphur.

4. Process according to either of Claims 1 and 2, **characterized in that** the production of the superalloy substrate consists:
- in providing, as one batch of material, a superalloy;
- in foundry casting the part and in introducing an active element into the remelted alloy during casting of the part, the active element being chosen from the group composed of lanthanides, yttrium, hafnium, zirconium and a combination of these elements.

5. Process according to either of Claims 1 and 2, **characterized in that** the production of the superalloy substrate consists:
- in providing, in one batch of material, a superalloy;
- in foundry casting the part; and
- in carrying out a desulphurization heat treatment on the cast part, the heat treatment being carried out in an inert or hydrogen-containing atmosphere.

6. Process according to any one of Claims 1 to 5, **characterized in that** the step of depositing the anti-oxidation protective coating consists:
- in electrolytically depositing a precious metal using an electrolyte solution of metal salts; and
- in carrying out a diffusion heat treatment in a hydrogen-containing atmosphere.

7. Process according to any one of Claims 1 to 5, **characterized in that** the step of depositing the anti-oxidation protective coating consists:
- in electrolytically depositing a precious metal using an electrolyte solution of metal salts, the sulphur content of which is less than 10 ppm by weight; and
- in carrying out a diffusion heat treatment in an inert or hydrogen-containing atmosphere.

8. Process according to Claim 7, **characterized in that** the electrolyte solution of metal salts has a sulphur content of less than 5 ppm by weight.

9. Process according to any one of Claims 6 to 8, **characterized in that** it furthermore consists in carrying out a chromatizing and/or aluminizing treatment in which a cement is alloyed with an active element chosen from the group composed of lanthanides, yttrium, hafnium, zirconium and a combination of these elements.

10. Process according to any one of Claims 6 to 8, **characterized in that** the step of depositing the anti-oxidation protective coating furthermore includes a chromatizing and/or aluminizing step in which a cement is brought into contact with a sulphur-trapping element, this element being inert with respect to the halogenated compounds used as activators during this chromatizing and/or aluminizing step.

11. Process according to Claim 10, **characterized in that** the sulphur-trapping element is chosen from zirconium-containing alloys, titanium-containing alloys, and oxides capable of combining with sulphur to form oxysulphides.

12. Process according to any one of the preceding claims, **characterized in that** the anti-oxidation protective coating constitutes a thermal barrier underlayer on which a layer of ceramic having a columnar structure is deposited.

13. Superalloy part obtained by the process according to any one of the preceding claims, **characterized in that** it comprises:
- a substrate made of a superalloy having a free sulphur content of at least less than 0.8 ppm by weight; and
- an anti-oxidation protective coating having a sulphur content of at least less than 0.8 ppm by weight, the protective coating being an aluminide coating.

14. Superalloy part according to Claim 13, **characterized in that** the sulphur content in the substrate and in the protective coating is less than 0.2 ppm by weight.

15. Superalloy part according to Claim 14, **characterized in that** the aluminide coating includes at least one metal chosen from the group composed of nickel, platinum, palladium, ruthenium, rhodium and chromium.

16. Superalloy part according to any one of Claims 13 to 15, **characterized in that** the protective coating constitutes a thermal barrier underlayer and is coated with a layer of a ceramic having a columnar structure.

17. Superalloy part according to Claim 16, **characterized in that** the ceramic layer is made of yttria-stabilized zirconia.

18. Superalloy part according to either of Claims 16 and 17, **characterized in that** the ceramic layer is deposited by electron-beam physical vapour deposition.
